# EUROPEAN PATENT APPLICATION

(11) **EP 3 792 318 A1**
(43) Date of publication of application: **17.03.2021**
(21) Application number: 18917593.8
(22) Date of filing: 19.11.2018
(51) Int. Cl.: C09D 7/60, C09K 5/06, C09D 1/02, C09D 7/61, C09D 5/18, C09K 21/04, C09D 183/04, B01J 13/02

(54) **COMPOSITE OF PHASE CHANGE MATERIAL-CONTAINING MICROCAPSULES AND SILICA, PREPARATION METHOD THEREFOR, AND NON-FLAMMABLE BINDER COMPOSITION COMPRISING SAME**

(30) Priority: 10.05.2018 KR 20180053517
(71) Applicant: BA Energy Co., Ltd., Gwangju 61089 (KR)
(72) Inventor: KANG, Tae Young, Naju-si Jeollanam-do 58217 (KR); SEO, Hyoung Woo, Gwangju 61026 (KR); PARK, Sang Ki, Gwangju 61218 (KR)
(74) Representative: Beck & Rössig European Patent Attorneys
(86) International application number: PCT/KR2018/014188
(87) International publication number: WO 2019/216510

(57) **Abstract**

A composite of phase-change-material-containing microcapsules and silica is proposed. The composite includes a silica matrix and phase-change-material-containing microcapsules dispersed in the matrix, each of the phase-change-material-containing microcapsules including a polymer shell and a core enclosed by the shell and formed of a phase change material. The composite is configured such that phase-change-material-containing microcapsules and silica having mesopores are mixed, and is thereby very effective at imparting mechanical stability and hydrophilicity to a material. Moreover, the composite capable of imparting mechanical stability and hydrophilicity can be applied to paint and the like, and is effectively able to form a binder composition suitable therefor.

## Description

### Technical Field

The present disclosure relates to a composite material in which a material containing a phase change material and silica are mixed, and more particularly to a composite material in which phase-change-material-containing microcapsules and silica are mixed.

### Background Art

In general, the internal temperature of buildings changes due to external influences such as solar heat and the like, and cooling or heating is performed in order to adjust the internal temperature to a temperature suitable for life.

Since the amount of energy required for cooling or heating is reduced when the temperature change of the buildings due to external influences is decreased, various attempts are being made to reduce the energy consumed in buildings using construction materials having high heat efficiency.

In particular, a method of storing energy in a latent heat storage manner using a material called a phase change material (PCM), which is a material that effectively stores heat energy, is being studied, and technologies such as addition of a phase change material to any one of multilayered protective coatings for treating the surface of concrete structures and the like have been developed (Korean Patent No. 10-1791932).

However, such a phase change material is very difficult to use due to the problem of leakage because it stores heat in the course of changing phase, and accordingly, efforts to develop a new material in which the phase is stabilized are continuing (Korean Patent No. 10-1841945), but sufficient performance has not been realized.

For reference, this study is a research project conducted with the support of the Ministry of Trade, Industry and Energy (MOTIE) and the Korea Institute of Energy Technology Evaluation and Planning (KETEP) (No. 20172020109240).

### [Citation List]

### [Patent Literature]

Korean Patent No. 10-1791932
Korean Patent No. 10-1841945

### Disclosure

### Technical Problem

The present disclosure has been made keeping in mind the problems encountered in the related art, and an objective of the present disclosure is to provide a novel composite having improved performance by mixing phase-change-material-containing microcapsules with silica.

### Technical Solution

In order to accomplish the above objective, an aspect of the present disclosure provides a composite of phase-change-material-containing microcapsules and silica, including: a matrix made of silica; and phase-change-material-containing microcapsules dispersed in the matrix, each of the phase-change-material-containing microcapsules including a shell made of a polymer and a core enclosed by the shell and formed of a phase change material.

The inventors of the present disclosure have developed core-shell-structured microcapsules having greatly improved usability because the outside of the phase change material is covered with a polymer shell while the properties of the phase change material are exhibited without change, and also a composite with silica in order to improve the usability thereof and to increase the efficiency at the same time.

The shell may be made of polyurea, and the phase change material may be paraffin.

The silica matrix is preferably mesoporous silica.

Another aspect of the present disclosure provides a method of manufacturing a composite of phase-change-material-containing microcapsules and silica, including: manufacturing phase-change-material-containing microcapsules; mixing a silica precursor and the phase-change-material-containing microcapsules in an aqueous solution; and synthesizing silica by reacting the silica precursor.

Here, in the manufacturing the phase-change-material-containing microcapsules, a shell may be formed with a polymer material synthesized through emulsion polymerization by adding a reactant for emulsion polymerization to the aqueous solution in which a phase change material is dispersed, and the inside of the shell may be filled with the phase change material during the formation of the shell from the polymer material, thereby forming a structure in which the outside of a core including the phase change material is covered with the shell including the polymer material.

Also, a surfactant is added before synthesizing the silica, and the surfactant alone is removed after synthesizing the silica, and thus a porous silica matrix is preferably formed. Here, the surfactant is preferably CTAB, and the CTAB alone is preferably removed under acidic conditions after synthesizing the silica.

The silica precursor may be selected from among ethyl silicate (TEOS), sodium metasilicate, and tetramethyl silicate.

Still another aspect of the present disclosure provides a non-flammable binder composition, including: 20 to 50 parts by weight of a composite of phase-change-material-containing microcapsules and porous silica; 40 to 70 parts by weight of sodium silicate (SiO₂/Na₂O molar ratio: 3); 15 to 35 parts by weight of a filler including silicon oxide (SiO₂) and talc (3MgO·4SiO₂·H₂O) mixed at the same weight ratio; 0.1 to 10 parts by weight of water; and 1 to 10 parts by weight of phosphoric acid (H₃PO₄), in which the composite of phase-change-material-containing microcapsules and porous silica is the composite of phase-change-material-containing microcapsules and porous silica according to the present disclosure.

At least one selected from among a phosphate compound, a phosphonate compound, a phosphinate compound, a phosphine oxide compound, a phosphazene compound, and a metal salt thereof may be further added thereto, thereby increasing flame retardancy.

Yet another aspect of the present disclosure provides phase-change-material-containing paint, manufactured by mixing the composite of phase-change-material-containing microcapsules and porous silica as described above with a silicone resin.

Here, the silicone resin is preferably at least one selected from among 1,1,3,3-tetramethyldisiloxane, 1,3,5,7-tetramethylcyclotetrasiloxane, tris(dimethylhydrogensiloxy)methylsilane, tris(dimethylhydrogensiloxy)phenylsilane, and a methylhydrogen polysiloxane diphenylsiloxane copolymer blocked with trimethylsiloxy groups at both ends thereof.

Also, at least one selected from among a phosphate compound, a phosphonate compound, a phosphinate compound, a phosphine oxide compound, a phosphazene compound, and a metal salt thereof may be added thereto, thereby increasing flame retardancy.

### Advantageous Effects

According to the present disclosure, a composite is configured such that phase-change-material-containing microcapsules and mesoporous silica are mixed, and is thus very effective at imparting mechanical stability and hydrophilicity to a material.

Moreover, the composite of the present disclosure capable of imparting mechanical stability and hydrophilicity can be applied to paint and the like, and is effectively able to form a binder composition suitable therefor.

### Brief Description of Drawings

FIG. 1 is a flowchart showing a process of manufacturing a composite in which phase-change-material-containing microcapsules and silica are mixed according to an embodiment of the present disclosure;
FIG. 2 is a flowchart showing a process of manufacturing the phase-change-material-containing microcapsules that are used in an embodiment of the present disclosure;
FIG. 3 shows images of phase-change-material-containing microcapsules manufactured using various PVP amounts and monomer concentrations;
FIG. 4 shows a micrograph of phase-change-material-containing microcapsules manufactured using 3.6 g of PVP and 10 wt% of each of IPDI and TETA;
FIG. 5 shows TGA data for the microcapsules manufactured according to an embodiment of the present disclosure;
FIG. 6 shows DSC data for the microcapsules manufactured according to an embodiment of the present disclosure;
FIG. 7 shows an SEM image of the composite of microcapsules and porous silica manufactured according to an embodiment of the present disclosure;
FIG. 8 shows DSC data for the composite of microcapsules and porous silica manufactured according to an embodiment of the present disclosure;
FIG. 9 shows the results of measurement of specific surface area of the composite of microcapsules and porous silica manufactured according to an embodiment of the present disclosure;
FIG. 10 shows the results of measurement on a heat insulator manufactured by mixing a heat insulator and a non-flammable binder according to an embodiment of the present disclosure; and
FIG. 11 shows the results of measurement on a typical heat-insulator sample.

### Mode for Disclosure

A detailed description will be given of embodiments of the present disclosure with reference to the accompanying drawings.

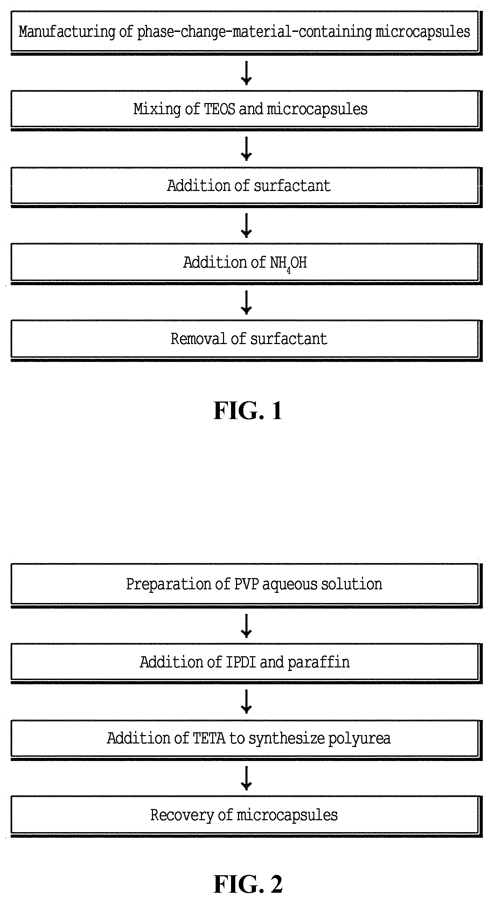

FIG. 1 is a flowchart showing the process of manufacturing a composite in which phase-change-material-containing microcapsules and silica are mixed according to an embodiment of the present disclosure.

In order to manufacture the composite of the present embodiment, phase-change-material-containing microcapsules, configured such that a phase change material is entrapped in a polymer shell, are first manufactured. The process of manufacturing the phase-change-material-containing microcapsules is described below.

FIG. 2 is a flowchart showing the process of manufacturing the phase-change-material-containing microcapsules that are used in an embodiment of the present disclosure.

In the process of manufacturing the microcapsules, a PVP aqueous solution is first prepared by dissolving PVP (poly(vinylpyrrolidone)) as an emulsifier in a solvent. Here, the solvent that is used is a mixture of water and methyl ethyl ketone.

Next, paraffin, which is a phase change material, and IPDI (isophorone diisocyanate), which is a water-soluble monomer as a first reactant, are added together to the PVP aqueous solution.

Also, triethylenetetramine (TETA), which is a water-soluble monomer as a second reactant, is added thereto, and IPDI and TETA are allowed to react, thus synthesizing polyurea.

As described above, in the synthesis of polyurea through emulsion polymerization, polyurea is synthesized to envelop the paraffin that is added along with the first reactant, thereby forming microcapsules having a core-shell structure in which the core of the phase change material is covered with the external polyurea shell.

Here, the core-shell structure may be manufactured in various sizes depending on the amount of PVP and the concentration of the monomer, and phase-change-material-containing microcapsules having a desired size may be manufactured by controlling the amount of PVP and the concentration of the monomer.

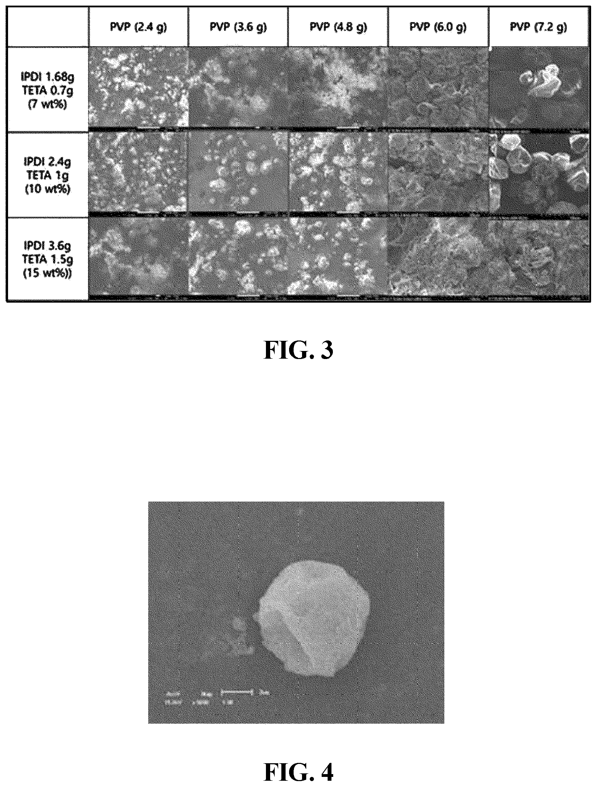

FIG. 3 shows images of the phase-change-material-containing microcapsules manufactured using various PVP amounts and monomer concentrations.

As shown therein, by controlling the amount of the emulsifier PVP and the concentration of the water-soluble monomers IPDI and TETA for synthesizing polyurea, the size of the microcapsules, containing the phase change material paraffin inside and covered with the polyurea shell, is changed.

For example, it is possible to manufacture microcapsules having a diameter in the range of 19±5 nm using 3.6 g of PVP and 10 wt% of each of IPDI and TETA, and a high-magnification enlarged SEM image of the microcapsules thus manufactured is illustrated in FIG. 4. The shell structure formed of polyurea synthesized through emulsion polymerization can be confirmed from FIG. 4.

Hereinafter, the thermal behavior of the manufactured microcapsules is evaluated, whereby the configuration and heat storage performance of the microcapsules are confirmed.

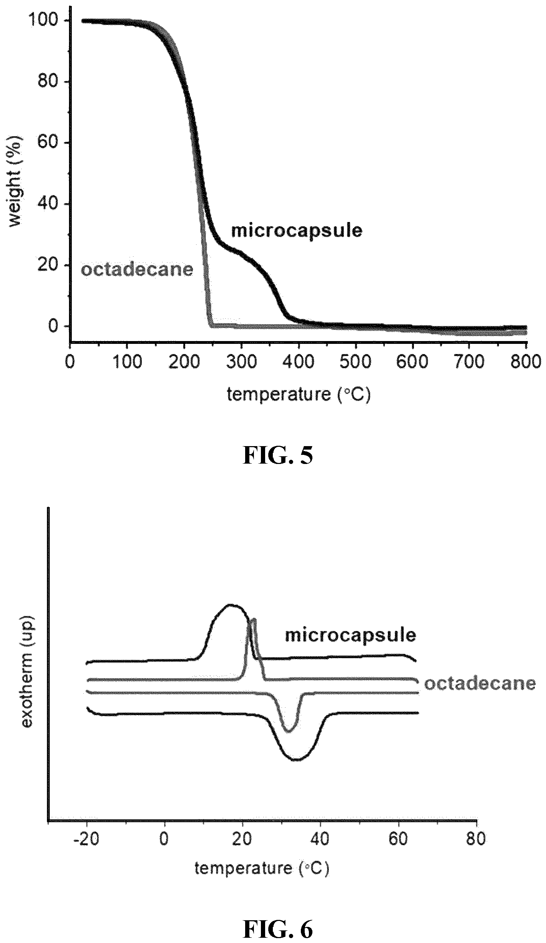

FIG. 5 shows TGA data for the microcapsules manufactured according to an embodiment of the present disclosure.

The red shows TGA data measured for octadecane, and the black shows TGA data for the microcapsules of FIG. 4 manufactured according to the present embodiment.

When the entire microcapsule is formed of a polymer material, it has to exhibit the same behavior as octadecane, represented by red, but the microcapsules of the present embodiment exhibit the behavior represented by black, indicating that the phase change material is contained therein. Moreover, it can be confirmed that the entire microcapsule of the present embodiment is configured to include about 30 wt% of the polyurea shell and 70 wt% of the phase change material positioned at the core.

FIG. 6 shows DSC data for the microcapsules manufactured according to an embodiment of the present disclosure.

The red shows DSC data measured for octadecane, and the black shows DSC data for the microcapsules of FIG. 4 manufactured according to the present embodiment.

It can be seen that an endothermic phenomenon appears near 32°C upon heating and an exothermic phenomenon appears near 17°C upon cooling, due to the phase transition phenomenon of paraffin, which is the phase change material positioned inside the microcapsules.

In the above process, the microcapsules containing therein a phase change material were manufactured through emulsion condensation, and it can be confirmed that the phase-change-material-containing microcapsules thus manufactured exhibit the intrinsic heat storage properties of the phase change material. As described above, the phase-change-material-containing microcapsules of the present disclosure are very effectively capable of greatly improving the usability thereof because the outside of the phase change material is covered with the polymer shell while the properties of the phase change material are exhibited without change.

Next, 0.75 ml of TEOS (tetraethyl orthosilicate) is prepared as a silica precursor and is then mixed, along with the phase-change-material-containing microcapsules of FIG. 4 manufactured in the previous step, in 200 ml of an aqueous solution.

Furthermore, 0.75 g of CTAB (cetyltrimethylammonium bromide) is added thereto, the CTAB serving as a surfactant for preparing silica into a porous material.

Also, 2.5 ml of NH₄OH is added to the aqueous solution of TEOS, phase-change-material-containing microcapsules and CTAB, whereby TEOS is polycondensed with silica.

Finally, only CTAB is selectively removed under acidic conditions, thereby forming a porous structure in silica.

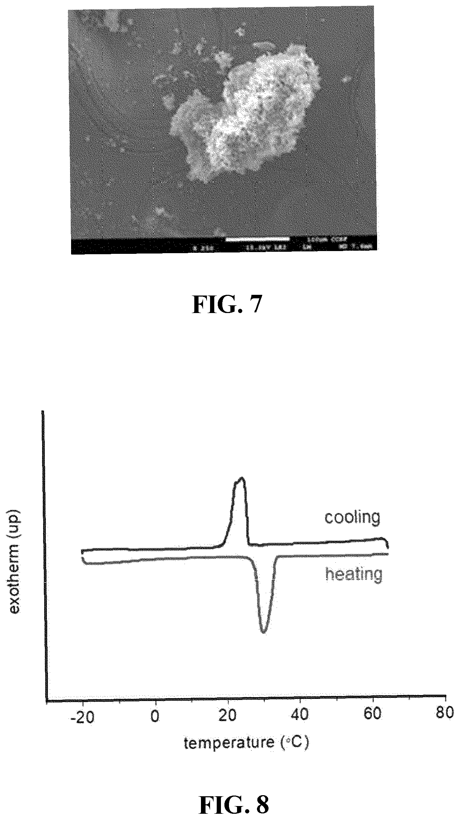

FIG. 7 shows an SEM image of the composite of microcapsules and porous silica manufactured according to an embodiment of the present disclosure.

As shown therein, an object having the outer appearance of porous silica having mesopores was synthesized, and the size thereof is about 100 to 200 *µ*m. As described above, since the phase-change-material-containing microcapsules of FIG. 4 have a very small size, it is predicted that the microcapsules are included in the manufactured material. In order to confirm the same, the thermal behavior of the manufactured material was evaluated.

FIG. 8 shows DSC data for the composite of microcapsules and porous silica manufactured according to an embodiment of the present disclosure.

As shown therein, the material manufactured through the above process exhibits endothermic and exothermic behavior, indicating that the phase-change-material-containing microcapsules used in the manufacturing process are included and that the properties of the phase change material are exhibited without change.

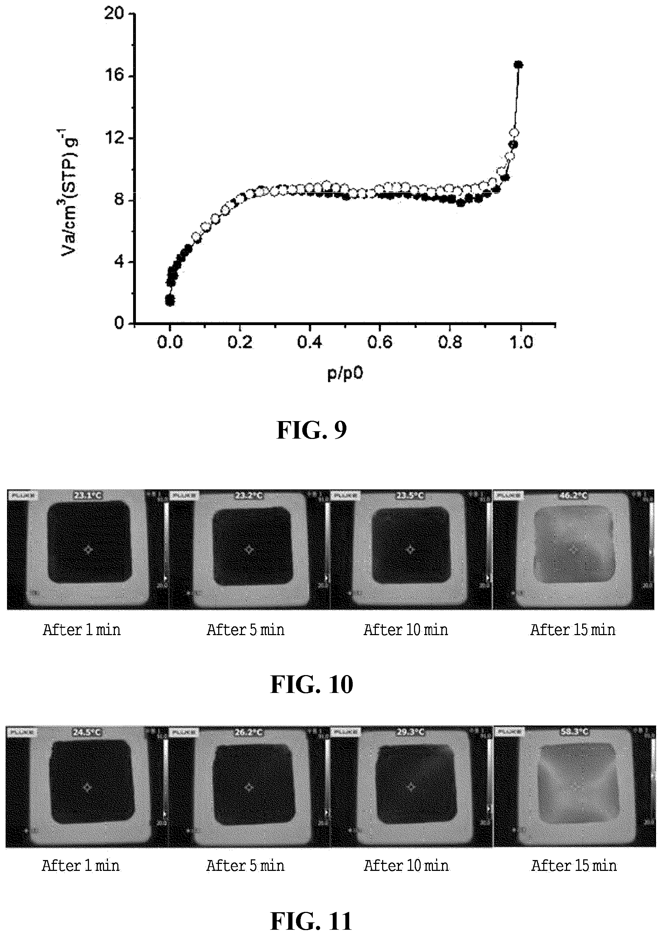

FIG. 9 shows the results of measurement of the specific surface area of the composite of microcapsules and porous silica manufactured according to an embodiment of the present disclosure.

Based on the results of measurement of the specific surface area of the composite of microcapsules and silica, a Type IV isothermal adsorption curve appeared, indicating that the composite of the microcapsules and silica according to the present embodiment has a mesoporous structure.

The composite of phase-change-material-containing microcapsules and porous silica manufactured through the process described above is advantageous because both mechanical stability and hydrophilicity may be exhibited by including the phase-change-material-containing microcapsules in silica.

Moreover, the application of the porous structure in which mesopores are formed in silica is effective at increasing insulativity due to the air layer introduced into the pores.

Another embodiment of the present disclosure provides a non-flammable binder composition using the composite of phase-change-material-containing microcapsules and porous silica.

The non-flammable binder composition of the present embodiment is manufactured by mixing 20 to 50 parts by weight of the composite of phase-change-material-containing microcapsules and porous silica manufactured as above, 40 to 70 parts by weight of sodium silicate (SiO₂/Na₂O molar ratio: 3), 15 to 35 parts by weight of a filler including silicon oxide (SiO₂) and talc (3MgO·4SiO₂·H₂O), mixed at the same weight ratio, 0.1 to 10 parts by weight of water, and 1 to 10 parts by weight of phosphoric acid (H₃PO₄).

In the manufacturing process, sodium silicate is first placed in a mixing tank and sufficiently stirred, after which a mixture, obtained by mixing silicon oxide and talc at the same weight ratio, is slowly added thereto with stirring. After completion of addition of the filler, the resulting mixture is transferred into a vertical bead mill, dispersed at a low speed of 200 rpm for 1 hr and then dispersed at 1800 rpm for about 4 hr, whereby the average particle diameter resulting from dispersion becomes 5 to 15. Thereafter, the composite of phase-change-material-containing microcapsules and porous silica manufactured as above is added thereto and dispersed at a low speed of 200 rpm for 30 min to obtain the result of dispersion. Additionally, water and formic acid are mixed, added to the result of dispersion, and stirred for 30 min, thereby yielding a non-flammable binder including the composite of phase-change-material-containing microcapsules and porous silica.

In order for the non-flammable binder according to an embodiment of the present disclosure to exhibit the strength or bonding force of a coating film, which is a function of the binder, it is preferable that the phase-change-material-containing microcapsules have a diameter in the range of 5 to 10 *µ*m.

The filler obtained by mixing silicon oxide and talc is a natural stone filler, and needs to be dispersed to have an average particle diameter of 5 to 25. If the amount of the filler is less than 15 parts by weight, it is difficult to form a strong coating film, and drying time and adhesion may decrease, which is undesirable. On the other hand, if the amount of the filler exceeds 35 parts by weight, it is difficult to exhibit the function of the binder.

Water functions as a curing retardant while controlling the viscosity of the non-flammable binder according to the present embodiment, and phosphoric acid is used as a curing agent. The curing speed of the non-flammable binder according to the present embodiment may be adjusted by varying the ratio of water to the curing agent.

The effect of use of the non-flammable binder according to the present embodiment is described below.

A heat insulator was pulverized to the same size, mixed with the non-flammable binder according to the present embodiment described above, poured into a mold, and cured for 12 hr, thus manufacturing a heat insulator.

FIG. 10 shows the results of measurement on a heat insulator manufactured by mixing a heat insulator and the non-flammable binder according to an embodiment of the present disclosure, and FIG. 11 shows the results of measurement on a typical heat-insulator sample.

In the state in which the external temperature was fixed to 70°C, the temperature change of the typical heat-insulator sample and the heat insulator using the non-flammable binder according to the present embodiment was measured using a thermal imaging camera. After 15 min, the temperature of the heat insulator using the non-flammable binder according to the present embodiment was 46.2°C, which was lower than 58.3°C, which is the temperature of the typical heat-insulator sample, indicating that thermal insulativity was increased compared to the typical heat insulator.

In order to increase the flame retardancy of the non-flammable binder of the present embodiment, at least one selected from among a phosphate compound, a phosphonate compound, a phosphinate compound, a phosphine oxide compound, a phosphazene compound, and a metal salt thereof may be further added thereto.

Meanwhile, the composite of phase-change-material-containing microcapsules and silica according to the present disclosure may be used in paint to be applied on the surface of construction materials such as heat insulators and the like.

Here, the composite of phase-change-material-containing microcapsules and silica is mixed with a silicone resin, thereby making it possible to manufacture phase-change-material-containing paint, which is environmentally friendly and has improved water resistance and bonding performance. When such phase-change-material-containing paint is applied on the surface of a construction material such as a heat insulator or the like, energy efficiency may be effectively increased due to the heat storage properties of the phase change material.

The silicone resin that is used in the phase-change-material-containing paint of the present disclosure may be selected from among 1,1,3,3-tetramethyldisiloxane, 1,3,5,7-tetramethylcyclotetrasiloxane, tris(dimethylhydrogensiloxy)methylsilane, tris(dimethylhydrogensiloxy)phenylsilane, a methylhydrogen polysiloxane diphenylsiloxane copolymer blocked with trimethylsiloxy groups at both ends thereof, and the like.

Also, at least one selected from among a phosphate compound, a phosphonate compound, a phosphinate compound, a phosphine oxide compound, a phosphazene compound, and a metal salt thereof may be further added thereto, thereby increasing the flame retardancy of the phase-change-material-containing paint.

### CROSS-REFERENCE TO RELATED APPLICATION

This patent application claims priority in accordance with Article 119(a) of the U.S. Patent Law (35 USC § 119(a)) with respect to Korean Patent Application No. 10-2018-0053517 filed on May 10, 2018, the entire content of which is incorporated by reference into this patent application. In addition, when this patent application claims priority for countries other than the United States for the same reason as above, the entire content thereof is incorporated by reference into this patent application.

## Claims

1. A composite of phase-change-material-containing microcapsules and silica, comprising:
a matrix comprising silica; and
phase-change-material-containing microcapsules dispersed in the matrix,
wherein each of the phase-change-material-containing microcapsules comprises a shell comprising a polymer and a core enclosed by the shell and comprising a phase change material.

2. The composite of claim 1, wherein the shell comprises polyurea.

3. The composite of claim 1, wherein the phase change material is paraffin.

4. The composite of claim 1, wherein the silica is mesoporous silica.

5. A method of manufacturing a composite of phase-change-material-containing microcapsules and silica, comprising:
manufacturing phase-change-material-containing microcapsules;
mixing a silica precursor and the phase-change-material-containing microcapsules in an aqueous solution; and
synthesizing silica by reacting the silica precursor.

6. The method of claim 5, wherein, in the manufacturing the phase-change-material-containing microcapsules, a shell is formed with a polymer material synthesized through emulsion polymerization by adding a reactant for emulsion polymerization to the aqueous solution in which a phase change material is dispersed, and an inside of the shell is filled with the phase change material during formation of the shell from the polymer material, thereby forming a structure in which an outside of a core comprising the phase change material is covered with the shell comprising the polymer material.

7. The method of claim 5, wherein a surfactant is added before synthesizing the silica, and the surfactant alone is removed after synthesizing the silica, thus forming a porous silica matrix.

8. The method of claim 7, wherein the surfactant is CTAB (cetyltrimethylammonium bromide), and the CTAB alone is removed under acidic conditions after synthesizing the silica.

9. The method of claim 5, wherein the silica precursor is selected from among ethyl silicate (TEOS), sodium metasilicate, and tetramethyl silicate.

10. A non-flammable binder composition, comprising:
20 to 50 parts by weight of the composite of the phase-change-material-containing microcapsules and porous silica set forth in claim 1 or 2;
40 to 70 parts by weight of sodium silicate (SiO₂/Na₂O molar ratio: 3);
15 to 35 parts by weight of a filler comprising silicon oxide (SiO₂) and talc (3MgO·4SiO₂·H₂O) mixed at a same weight ratio;
0.1 to 10 parts by weight of water; and
1 to 10 parts by weight of phosphoric acid (H₃PO₄).

11. The non-flammable binder composition of claim 10, further comprising at least one selected from among a phosphate compound, a phosphonate compound, a phosphinate compound, a phosphine oxide compound, a phosphazene compound, and a metal salt thereof.

12. A phase-change-material-containing paint, manufactured by mixing the composite of the phase-change-material-containing microcapsules and porous silica set forth in claim 1 or 2 with a silicone resin.

13. The phase-change-material-containing paint of claim 12, wherein the silicone resin is at least one selected from among 1,1,3,3-tetramethyldisiloxane, 1,3,5,7-tetramethylcyclotetrasiloxane, tris(dimethylhydrogensiloxy)methylsilane, tris(dimethylhydrogensiloxy)phenylsilane, and a methylhydrogen polysiloxane diphenylsiloxane copolymer blocked with trimethylsiloxy groups at both ends thereof.

14. The phase-change-material-containing paint of claim 12, to which at least one selected from among a phosphate compound, a phosphonate compound, a phosphinate compound, a phosphine oxide compound, a phosphazene compound, and a metal salt thereof is added.
